(19) Europäisches Patentamt
European Patent Office
Office européen des brevets

(11) **EP 1 832 891 B1**

(12) **EUROPEAN PATENT SPECIFICATION**

(45) Date of publication and mention
of the grant of the patent:
**08.05.2013 Bulletin 2013/19**

(21) Application number: **06004754.5**

(22) Date of filing: **08.03.2006**

(51) Int Cl.:
***G01S 19/08*** *(2010.01)*   ***G01S 19/20*** *(2010.01)*

(54) **Method and apparatus for transforming overbounds**

Verfahren und Vorrichtung zur Umwandlung von Overbounds

Procédé et appareil de transformation d'overbounds

(84) Designated Contracting States:
**DE FR GB IT**

(43) Date of publication of application:
**12.09.2007 Bulletin 2007/37**

(73) Proprietor: **EADS Astrium GmbH**
**81663 München (DE)**

(72) Inventors:
 • **Trautenberg, Hans L., Dr.**
  **50823 Köln (DE)**
 • **Frankenberger, Harald, Dr.**
  **85521 Ottobrunn (DE)**

(74) Representative: **Hummel, Adam et al**
**EADS Deutschland GmbH**
**Patentabteilung**
**81663 München (DE)**

(56) References cited:
 • **OEHLER V ET AL: "The Galileo Integrity Concept" INTERNATIONAL TECHNICAL MEETING OF THE SATELLITE DIVISION OF THE INSTITUTE OF NAVIGATION, WASHINGTON, DC, US, 21 September 2004 (2004-09-21), pages 604-615, XP002375520**
 • **RIFE J, WALTER T AND BLANCH J: "Overbounding SBAS and GBAS Error Distributions with Excess-Mass Functions" PROCEDDINGS OF GNSS 2004, 8 December 2004 (2004-12-08), XP002398121 Sydney, Australia**
 • **RIFE J ET AL: "Paired overbounding and application to GPS augmentation" POSITION LOCATION AND NAVIGATION SYMPOSIUM, 2004. PLANS 2004 MONTEREY, CA, USA 26-29 APRIL 2004, PISCATAWAY, NJ, USA,IEEE, US, 26 April 2004 (2004-04-26), pages 439-446, XP010768906 ISBN: 0-7803-8416-4**
 • **RIFE J ET AL: "Core overbounding and its implications for LAAS Integrity" PROCEEDINGS OF 17TH ION GNSS INT. TECHNICAL MEETING, 24 September 2004 (2004-09-24), pages 2810-2821, XP002398122 Longbeach, CA, USA**

**Description**

The invention relates to a procedure and an apparatus for transferring a Galileo overbound or an ICAO overbound to a pairwise overbound with excess mass (POEM).

For Global Navigation Satellite Systems (GNSS) based navigation systems for aviation, it has to be guaranteed that the position the system provides has sufficient integrity. This means that the probability that the navigation system supplies hazardously misleading information (HMI) should be proven to remain extremely small under all circumstances. The problem of trying to guarantee that such a system offers sufficient integrity is known as the overbounding problem, because practical solutions are necessarily conservative (bounding) with respect to the performance that is actually obtained. Further, Safty-of-life (SoL) GNSS augmentation systems must provide bounds on the probability with which hazardous navigation errors occur.

The integrity information sent to the user contains no explicit provisions for protecting against biases. Instead the user are sent protection factors that correspond to zero-mean error distributions. The users combine the received protection factors using their own local knowledge to calculate protection levels that correspond to their position estimate. The broadcast protection factors must be sufficient such that any individual user has only a small probability (e.g. less than a one in ten million), for each approach, that their true position error exceeds the calculated protection level. The ground system for instance must guarantee these protection factors without knowing precisely where the users are, or which satellite they observe.

For determining the system's integrity, errors in the range domain are transformed into errors in the position domain. During the transformation of the errors in the range domain into the errors in the position domain, the corresponding error statistics (probability distribution functions of the errors) are transformed by the convolution.

In the literature, several different overbounding concepts are known. One of these concepts is the Galileo overbounding as defined by the Galileo requirements. Another concept is the paired overbounding with excess mass (POEM). The Galileo overbounding has the disadvantage that it is not preserved during convolution, whereas the POEM is preserved during convolution. That means that the convolution of two excess mass overbounding distributions will overbound the convolution of the two original convolutions. Thus, the paired overbounding concept effectively relates range domain and position domain overbounding.

The publications "The Galileo Integrity Concept", Oehler V. et al., International Technical Meeting of the Satellite Division of the Institute of Navigation", Washington, DC, US, 21 September 2004, pages 604-615, and "Overbounding SBAS and GBAS Error Distributions with Excess-Mass Functions", J.Rife, T. Walter and J. Blanch, Proceedings of GNSS 2004, 8 December 2004, Sydney, Australia, disclose methods for determining conservative overbounds in satellite positioning systems.

It is a problem of the present invention to define a process and an apparatus that improve the reliability of the determined integrity risk.

This problem is solved by a process according to claim 1 and an apparatus according to claim 4.

This document describes how the Galileo Overbounding definition of a distribution can be used to define parameters for a paired overbounding with excess mass (POEM) of the same distribution. This is necessary as the properties of the Galileo overbounding definition are not preserved during convolutions of distributions, whereas the paired overbounding with excess mass properties are preserved during convolutions of distributions. The convolution is necessary for the transformation from the range domain to the position domain.

Before describing several embodiments of the invention several overbounding definitions are stated.

## 1 Overbounding Definitions

### 1.1 Galileo Overbounding definition

For Galileo the probability density $p$ is overbounded by a function $q$ if the equation

$$\int_{-\infty}^{-y} p(x)\,dx + \int_{y}^{\infty} p(x)\,dx \leq \int_{-\infty}^{-y} q(x)\,dy + \int_{y}^{\infty} q(x)\,dx \quad \text{for all } y \geq 0 \qquad (0.1)$$

holds true.

It has to be noted further, that for Galileo it is foreseen to use as the overbounding distributions only Gaussian distributions of the form

$$q(t) \equiv \frac{1}{\sqrt{2\pi}\sigma} e^{-\frac{t^2}{2\sigma^2}} . \qquad (0.2)$$

It is worthwhile to note, that $q$ is symmetric

$$q(t) = q(-t), \qquad (0.3)$$

zero mean

$$\int_{-\infty}^{\infty} t \cdot q(t)\, dt = 0, \qquad (0.4)$$

$$\int_{-\infty}^{0} q(t)\, dt = \int_{0}^{\infty} q(t)\, dt = 0.5, \qquad (0.5)$$

and that

$$\int_{a}^{b} q(x) \geq 0 \text{ for any } b \geq a \quad . \qquad (0.6)$$

It is worthwhile to note that

$$\int_{a}^{b} p(x) \geq 0 \text{ for any } b \geq a \qquad (0.7)$$

and that

$$\int_{a}^{b} p(x) \leq 1 \text{ for any } b, a \qquad . \qquad (0.8)$$

It is known from literature, that the property defined by equation (0.1) is not preserved during convolution of distributions.

**1.2 Paired Overbounding with Excess Mass definition**

A probability density $p$ is paired overbounded by the functions $q_L$ and $q_R$, if the equation

$$\int\limits_{-\infty}^{y} q_L(x)\, dx \geq \int\limits_{-\infty}^{y} p(x)\, dx \geq 1 - \int\limits_{y}^{\infty} q_R(x)\, dx \text{ for all } y \qquad (0.9)$$

holds true. The functions $q_{L/R}$ have to fulfil the following requirements.

$$q_{L/R}(x) \geq 0 \quad \text{for all } x \qquad (0.10)$$

and

$$\int\limits_{-\infty}^{\infty} q_{L/R}(x)\, dx = K_{L/R} \geq 1 \qquad (0.11)$$

It is known that the property defined by equation (0.9) is preserved during convolution and scaling. To ensure that the convolutions can be performed analytically it is convenient to define $q_L$ and $q_R$ as follows:

$$q_L(x) = \frac{K_L}{\sqrt{2\pi}\sigma_L} e^{-\frac{(x-b_L)^2}{2\sigma_L^2}} \qquad (0.12)$$

$$q_R(x) = \frac{K_R}{\sqrt{2\pi}\sigma_R} e^{-\frac{(x-b_R)^2}{2\sigma_R^2}} \qquad (0.13)$$

If the individual contributions of the range errors $\varepsilon_i$ are paired overbounded with excess mass by the functions

$$q_{L,i}(x) = \frac{K_{L,i}}{\sqrt{2\pi}\sigma_{L,i}} e^{-\frac{(x-b_{L,i})^2}{2\sigma_{L,i}^2}} \qquad (0.14)$$

and

$$q_{R,i}(x) = \frac{K_{R,i}}{\sqrt{2\pi}\sigma_{R,i}} e^{-\frac{(x-b_{R,i})^2}{2\sigma_{R,i}^2}} \qquad (0.15)$$

and if the errors in the range domain $\varepsilon_i$ are mapped onto the error in the position domain $\varepsilon_{pos}$ by

$$\varepsilon_{pos} = \sum_{i=1}^{n} M_{w,i} \cdot \varepsilon_i \qquad (0.16)$$

an upper bound for the integrity risk at the alert limit $p_{w,\text{int}}$ (AL) in the direction $w$ is given by

$$p_{w,\text{int}}\left(AL\right) \leq \frac{K_{L,M_w} + K_{R,M_w}}{2} - \frac{K_{R,M_w}}{2}\, erf\left(\frac{AL - b_{R,M_w}}{\sqrt{2}\sigma_{R,M_w}}\right) + \frac{K_{L,M_w}}{2}\, erf\left(\frac{-AL - b_{L,M_w}}{\sqrt{2}\sigma_{L,M_w}}\right) \quad (0.17)$$

with

$$g\left(\alpha\right) = \begin{cases} R & ,\text{if } \alpha > 0 \\ L & ,\text{if } \alpha < 0 \end{cases} \quad (0.18)$$

$$k\left(\alpha\right) = \begin{cases} L & ,\text{if } \alpha > 0 \\ R & ,\text{if } \alpha < 0 \end{cases} \quad (0.19)$$

$$K_{R,M_w} = \prod_{i=1}^{n} K_{g(M_{w,i}),i} \quad (0.20)$$

$$K_{L,M_w} = \prod_{i=1}^{n} K_{k(M_{w,i}),i} \quad (0.21)$$

$$b_{R,M_w} = \sum_{i=1}^{n} M_{w,i} b_{g(M_{w,i}),i} \quad (0.22)$$

$$b_{L,M_w} = \sum_{i=1}^{n} M_{w,i} b_{k(M_{w,i}),i} \quad (0.23)$$

$$\sigma_{R,M_w} = \sqrt{\sum_{i=1}^{n}\left(M_{w,i}\sigma_{g(M_{w,i}),i}\right)^2} \quad (0.24)$$

$$\sigma_{L,M_w} = \sqrt{\sum_{i=1}^{n}\left(M_{w,i}\sigma_{k(M_{w,i}),i}\right)^2} \quad (0.25)$$

## 1.3 ICAO overbounding

For ICAO the probability density $p$ is overbounded by a function $q$ if the equations

$$\int_{-\infty}^{-y} p(x)\,dx \le \int_{-\infty}^{-y} q(x)\,dy \quad \text{for all } y \ge 0 \qquad (0.26)$$

$$\int_{y}^{\infty} p(x)\,dx \le \int_{y}^{\infty} q(x)\,dy \quad \text{for all } y \ge 0 \qquad (0.27)$$

hold true.

The ICAO overbounding definition implies directly the Galileo overbounding definition. This can be seen by a simple addition of the defining inequalities. The opposite is not valid in general.

It has to be noted further, that for ICAO it is foreseen to use as the overbounding distributions only Gaussian distributions of the form

$$q(t) \equiv \frac{1}{\sqrt{2\pi}\sigma} e^{-\frac{t^2}{2\sigma^2}}. \qquad (0.28)$$

It has to be further noted that ICAO states that for the receiver contribution to the error it can be assumed that

$$p(x) = p(-x), \qquad (0.29)$$

$$p\big(sign(x)(|x|+\varepsilon)\big) \le p(x) \quad \text{for all } x \text{ and for all } \varepsilon \ge 0 \qquad (0.30)$$

that is probability density p is symmetric and monotonically increasing up to a single mode in x = 0 and then monotonically decreasing (p is also called unimodal).

## 2 Process for mapping of Galileo Overbounding to POEM

### 2.1 Mapping without bias

As a first embodiment the process for mapping of Galileo overbounding to POEM for the case without bias is described.

For a mapping of the Galileo overbounding to POEM without bias we define

$$q_{L/R} \equiv 2q \qquad (0.31)$$

We then compute, observing that $q$ is symmetric,

$$\int_{-\infty}^{y} q_L(x)\,dx = \int_{-\infty}^{y} 2q(x)\,dx = \int_{-\infty}^{y} q(x)\,dx + \int_{-y}^{\infty} q(x)\,dx. \qquad (0.32)$$

For $y \le 0$ it follows now from (0.32), (0.1), and (0.7) that

$$\int_{-\infty}^{y} q_L(x)\, dx \geq \int_{-\infty}^{y} p(x)\, dy + \int_{-y}^{\infty} p(x)\, dx \geq \int_{-\infty}^{y} p(x)\, dy . \qquad (0.33)$$

For $y \geq 0$ it follows now from (0.32), the first part of (0.5), and (0.8) that

$$\int_{-\infty}^{y} q_L(x)\, dx = \int_{-\infty}^{0} q_L(x)\, dx + \int_{0}^{y} q_L(x)\, dx = 1 + \int_{0}^{y} q_L(x)\, dx \geq 1 \geq \int_{-\infty}^{y} p(x)\, dy . \qquad (0.34)$$

So we have shown that with the definition given in (0.31) and provided that (0.1) hold true the following condition holds true for all $y$

$$\int_{-\infty}^{y} q_L(x)\, dx \geq \int_{-\infty}^{y} p(x)\, dy \qquad (0.35)$$

We now compute, observing that $q$ is symmetric,

$$1 - \int_{y}^{\infty} q_R(x)\, dx = 1 - \int_{y}^{\infty} 2q(x)\, dx = 1 - \int_{-\infty}^{-y} q(x)\, dx - \int_{y}^{\infty} q(x)\, dx \qquad (0.36)$$

For $y \geq 0$ it follows from (0.36), (0.1), and (0.7)

$$1 - \int_{y}^{\infty} q_R(x)\, dx = 1 - \int_{-\infty}^{-y} q(x)\, dx - \int_{y}^{\infty} q(x)\, dx \leq 1 - \int_{-\infty}^{-y} p(x)\, dx - \int_{y}^{\infty} p(x)\, dx \leq 1 - \int_{y}^{\infty} p(x)\, dx \quad (0.37)$$

For $y \leq 0$ if follows from the first part of (0.36), (0.5), (0.6), and (0.8)

$$1 - \int_{y}^{\infty} q_R(x)\, dx = 1 - \int_{0}^{\infty} 2q(x)\, dx - \int_{y}^{0} 2q(x)\, dx = - \int_{y}^{0} 2q(x)\, dx \leq 0 \leq 1 - \int_{y}^{\infty} p(x)\, dx \quad (0.38)$$

So we have shown with (0.37) and (0.38) that for any $y$ the following holds true:

$$1 - \int_{y}^{\infty} q_R(x)\, dx \leq 1 - \int_{y}^{\infty} p(x)\, dx = \int_{-\infty}^{y} p(x)\, dx \qquad (0.39)$$

Combing (0.35) and (0.39) we finally get

$$\int_{-\infty}^{y} q_L(x)\, dx \ge \int_{-\infty}^{y} p(x)\, dy \ge 1 - \int_{y}^{\infty} q_R(x)\, dx \qquad (0.40)$$

for any $y$.

Assuming now $m$ satellites and on each range two different types of contributions of range errors, say $\varepsilon_i$ and $\varepsilon_{m+i}$ on range $i \in \{1,...,m\}$, e.g. one type due to the system in space (errors from orbit, satellite, clock, etc.) and one due to the local effects at the receiver location (errors from atmosphere, receiver noise, multipath, etc.). Let $n = 2 \cdot m$. Then using definition (0.31) results in

$$K_{L,i} = K_{R,i} = 2 \text{ for all } i = 1,...,n \qquad (0.41)$$

$$b_{L,i} = b_{R,i} = 0 \text{ for all } i = 1,...,n \qquad (0.42)$$

$$\sigma_{L,i} = \sigma_{R,i} = \sigma_i = SISA_i \text{ for all } i = 1,...,m \quad \text{and}$$
$$\sigma_{L,i} = \sigma_{R,i} = \sigma_i = \sigma_{u,i-m} \text{ for all } i = m+1,...,n \qquad (0.43)$$

for the fault free case.

Taking (0.41), (0.42), (0.43) and the equality $-erf(x) = erf(-x)$ into account, (0.17) simplifies to

$$p_{w,\text{int}}(AL) \le 2^n \left( 1 - erf\left( \frac{AL}{\sqrt{2 \sum_{i=1}^{n} \left( M_{w,i} \sigma_i \right)^2}} \right) \right) \qquad (0.44)$$

Observing $M_i = M_{m+i}$ for all $i = 1,...,m$ because these factors depend only on the geometry given by the m satellites and the receiver location but not on the special type of error contribution, this formular can be written as

$$p_{w,\text{int}}(AL) \le 4^m \left( 1 - erf\left( \frac{AL}{\sqrt{2 \sum_{i=1}^{m} M_{w,i}^2 \left( SISA_i^2 + \sigma_{u,i}^2 \right)}} \right) \right) \qquad (0.45)$$

For the faulty case, satellite $j \in \{1,...,m\}$ is faulty, we get

$$K_{L,i} = K_{R,i} = 2 \text{ for all } i = 1,...,n \qquad (0.46)$$

$$b_{L,i} = b_{R,i} = 0 \text{ for all } i = 1,\ldots,n \text{ with } i \neq j$$
$$\text{and} \quad -b_{L,j} = b_{R,j} = TH_j \tag{0.47}$$

$$\sigma_{L,i} = \sigma_{R,i} = \sigma_i = SISA_i \quad \text{for all } i = 1,\ldots,m \text{ with } i \neq j$$
$$\text{and} \quad \sigma_{L,i} = \sigma_{R,i} = \sigma_i = \sigma_{u,i-m} \quad \text{for all } i = m+1,\ldots,n \tag{0.47'}$$
$$\text{and} \quad \sigma_{L,j} = \sigma_{R,j} = \sigma_j = SISMA_j$$

$$P_{w,int}(AL) \leq 2^n \left( 1 - erf\left( \frac{AL - \left|M_{w,j}\right| TH_j}{\sqrt{2\sum_{i=1}^{n}\left(M_{w,i}\sigma_i\right)^2}} \right) \right) \tag{0.48}$$

Again observing $M_i = M_{m+i}$ for all $i=1,\ldots,m$ this formular can be written as

$$P_{w,int}(AL) \leq 4^m \left( 1 - erf\left( \frac{AL - \left|M_{w,j}\right| TH_j}{\sqrt{2\sum_{i=1,i\neq j}^{m} M_{w,i}^2\left(SISA_i^2 + \sigma_{u,i}^2\right) + 2M_{w,j}^2\left(SISMA_j^2 + \sigma_{u,j}^2\right)}} \right) \right) \tag{0.49}$$

### 2.2 Mapping with bias

As a second embodiment the process for mapping of Galileo overbounding to POEM for the case with bias is described.

For a mapping of the Galileo overbounding to POEM with bias we define

$$q'_L(x) \equiv \theta(-x)2q(x) \tag{0.50}$$

$$q'_R(x) \equiv \theta(x)2q(x) \tag{0.51}$$

where $\theta$ is a function, defined for real values $x$ by

$$\theta(x) = \begin{cases} 1, & \text{if } x \geq 0 \\ 0, & \text{otherwise.} \end{cases}$$

For $y \leq 0$ we then compute, observing that $q$ is symmetric,

$$\int\limits_{-\infty}^{y} q'_L(x)\,dx = \int\limits_{-\infty}^{y} 2q(x)\,dx = \int\limits_{-\infty}^{y} q(x)\,dx + \int\limits_{-y}^{\infty} q(x)\,dx. \qquad (0.52)$$

It follows now from (0.52), (0.1), and (0.7) that

$$\int\limits_{-\infty}^{y} q'_L(x)\,dx \geq \int\limits_{-\infty}^{y} p(x)\,dy + \int\limits_{-y}^{\infty} p(x)\,dx \geq \int\limits_{-\infty}^{y} p(x)\,dy. \qquad (0.53)$$

For $y \geq 0$ it follows from first part of (0.5), and (0.8) that

$$\int\limits_{-\infty}^{y} q'_L(x)\,dx = \int\limits_{-\infty}^{0} q'_L(x)\,dx + \int\limits_{0}^{y} q'_L(x)\,dx = 1 + 0 \geq 1 \geq \int\limits_{-\infty}^{y} p(x)\,dy. \qquad (0.54)$$

So we have shown that with the definition given in (0.50) and provided that (0.1) hold true the following condition holds true for all $y$

$$\int\limits_{-\infty}^{y} q'_L(x)\,dx \geq \int\limits_{-\infty}^{y} p(x)\,dy \qquad (0.55)$$

We now compute for $y \geq 0$ and observing that $q$ is symmetric,

$$1 - \int\limits_{y}^{\infty} q'_R(x)\,dx = 1 - \int\limits_{y}^{\infty} 2q(x)\,dx = 1 - \int\limits_{-\infty}^{-y} q(x)\,dx - \int\limits_{y}^{\infty} q(x)\,dx \qquad (0.56)$$

It follows from (0.56), (0.1), and (0.7)

$$1 - \int\limits_{y}^{\infty} q'_R(x)\,dx = 1 - \int\limits_{-\infty}^{-y} q(x)\,dx - \int\limits_{y}^{\infty} q(x)\,dx \leq 1 - \int\limits_{-\infty}^{-y} p(x)\,dx - \int\limits_{y}^{\infty} p(x)\,dx \leq 1 - \int\limits_{y}^{\infty} p(x)\,dx \qquad (0.57)$$

For $y \leq 0$ if follows from (0.5), (0.6), and (0.8)

$$1 - \int\limits_{y}^{\infty} q'_R(x)\,dx = 1 - \int\limits_{0}^{\infty} q'_R(x)\,dx = 1 - \int\limits_{0}^{\infty} 2q(x)\,dx = 0 \leq 1 - \int\limits_{y}^{\infty} p(x)\,dx \qquad (0.58)$$

So we have shown with (0.57) and (0.58) that for any $y$ the following holds true:

$$1 - \int_{y}^{\infty} q_R'(x)\, dx \le 1 - \int_{y}^{\infty} p(x)\, dx = \int_{-\infty}^{y} p(x)\, dx \qquad (0.59)$$

Combining (0.55) and (0.59) we finally get

$$\int_{-\infty}^{y} q_L'(x)\, dx \ge \int_{-\infty}^{y} p(x)\, dy \ge 1 - \int_{y}^{\infty} q_R'(x)\, dx \qquad (0.60)$$

for any $y$.

Assuming again as above $m$ satellites and on each range two different types of contributions of range errors, say $\varepsilon_i$ and $\varepsilon_{m+i}$ on range $i \in \{1,...,m\}$, e.g. one due to the system in space (errors from orbit, satellite, clock, etc.) and one due to the local effects at the receiver location (errors from atmosphere, receiver noise, multipath, etc.). Let $n = 2 \cdot m$. Then we are able to proof that probability densities $p_i$ are paired overbounded by the functions $q_{L,i}$ and $q_{R,i}$ defined by equations (0.14) and (0.15) with

$$\begin{aligned} \sigma_{L,i} = \sigma_{R,i} = \sigma_i = SISA_i \text{ for all } i = 1,...,m \quad \text{and} \\ \sigma_{L,i} = \sigma_{R,i} = \sigma_i = \sigma_{u,i-m} \text{ for all } i = m+1,...,n \end{aligned} \qquad (0.61)$$

$$-b_{L,i} = b_{R,i} = b_i > 0 \text{ for all } i = 1,...,n \qquad (0.62)$$

$$K_{L,i} = K_{R,i} = K_i = 2 \cdot \left(1 + erf(\frac{b_i}{\sigma_i \sqrt{2}})\right)^{-1} \text{ for all } i = 1,...,n \qquad (0.63)$$

for the fault free case.

Taking these definitions into account and remembering equality $-erf(x) = erf(-x)$, equation (0.17) simplifies to

$$p_{w,int}(AL) \le \frac{2^n}{\prod_{i=1}^{n}\left(1 + erf(\frac{b_i}{\sigma_i \sqrt{2}})\right)} \cdot \left(1 - erf\left(\frac{AL - \sum_{i=1}^{n}|M_{w,i}|b_i}{\sqrt{2\sum_{i=1}^{n}(M_{w,i}\sigma_i)^2}}\right)\right) \qquad (0.64)$$

Observing again $M_i = M_{m+i}$ for all $i = 1,...,m$ because these factors depend only on the geometry given by the m satellites and the receiver location but not on the special type of error contribution, this formular can be written as

$$p_{w,int}(AL) \le \frac{4^m}{\prod_{i=1}^{m}\left(1 + erf(\frac{b_i}{SISA_i \sqrt{2}})\right) \cdot \prod_{i=1}^{m}\left(1 + erf(\frac{b_{m+i}}{\sigma_{u,i}\sqrt{2}})\right)} \cdot \left(1 - erf\left(\frac{AL - \sum_{i=1}^{m}|M_{w,i}|(b_i + b_{m+i})}{\sqrt{2\sum_{i=1}^{m}M_{w,i}^2(SISA_i^2 + \sigma_{u,i}^2)}}\right)\right)$$

For the faulty case, satellite $j \in \{1,...,m\}$ is faulty, we get

$$\sigma_{L,i} = \sigma_{R,i} = \sigma_i \doteq SISA_i \text{ for all } i = 1,...,m \text{ with } i \neq j$$
$$\text{and } \sigma_{L,i} = \sigma_{R,i} = \sigma_i = \sigma_{u,i-m} \text{ for all } i = m+1,...,n \qquad (0.65)$$
$$\text{and } \sigma_{L,j} = \sigma_{R,j} = \sigma_j = SISMA_j$$

$$-b_{L,i} = b_{R,i} = b_i > 0 \text{ for all } i = 1,...,n \text{ with } i \neq j$$
$$\text{and } -b_{L,j} = b_{R,j} = b_j + TH_j \qquad (0.65')$$

$$K_{L,i} = K_{R,i} = K_i = 2 \cdot \left(1 + erf(\frac{b_i}{\sigma_i \sqrt{2}})\right)^{-1} \text{ for all } i = 1,...,n, \text{ i.e. inclusive } j \qquad (0.66)$$

$$p_{w,\text{int}}(AL) \leq \frac{2^n}{\prod\limits_{i=1}^{n}\left(1 + erf(\frac{b_i}{\sigma_i\sqrt{2}})\right)} \cdot \left(1 - erf\left(\frac{AL - |M_{w,j}|TH_j - \sum\limits_{i=1}^{n}|M_{w,i}|b_i}{\sqrt{2\sum\limits_{i=1}^{n}(M_{w,i}\sigma_i)^2}}\right)\right) \qquad (0.67)$$

As shown before several times (e.g. see inequalities (0.44) and (0.45)) this formular can be written using the original symbols. This will be omitted here.

More worth to mention is the fact that different choices of $b_i$ lead to different values for $p_{w,int}(AL)$. The optimal choice, that gives smallest $p_{w,int}(AL)$, depends on the actual satellite/user geometry. Therefore the user has to determine the optimal choice of $b_i$ by himself.

### 3 Process for mapping of ICAO Overbounding to POEM

As a third embodiment the process for mapping of ICAO overbounding to POEM is described.

As already stated ICAO overbounding implies Galileo overbounding. Therefore the method of mapping Galileo overbounding to POEM described in the chapter before is also applicable for ICAO overbounding.

The question arising is whether it is possible to get a smaller factor than 2 as necessary when mapping Galileo overbounding to POEM by definition of $q_{L/R} \equiv 2q$ for mapping without bias and $q'_L(x) \equiv \theta(-x)2q(x)$ and $q'_R(x) \equiv \theta(x)2g(x)$ for mapping with bias.

A positive function $q_L$ is part of POEM if inequality $\int\limits_{-\infty}^{y} q_L(x)\,dx \geq \int\limits_{-\infty}^{y} p(x)\,dx$ is fulfilled for all $y$. For negative $y$ we have the same inequality for $q$ itself. But for positive values of $y$ we know nothing but $\int\limits_{-\infty}^{y} p(x)\,dx \leq 1$. Therefore the only condition we can use is $\int\limits_{-\infty}^{y} q_L(x)\,dx \geq 1$ for all positive values of $y$. For reasons of continuity the same is valid for $y = 0$. Using the Gaussian type of $q_L$ we calculate $\int_{-\infty}^{y} q_L(x)\, dx = \frac{K_L}{2} \cdot \left( 1 + erf(\frac{y}{\sigma_L \sqrt{2}}) \right)$. Inserting $y=0$ leads to

$$ 1 \le \int_{-\infty}^{0} q_L(x)\, dx = \frac{K_L}{2} \cdot \left( 1 + erf(\frac{0}{\sigma_L \sqrt{2}}) \right) = \frac{K_L}{2} \quad \Rightarrow \quad K_L \ge 2, $$

which answers the above question: we can not get a smaller factor than 2 in the definition of $q_L$.

A positive function $q_R$ is part of POEM if inequality $1 - K_R + \int_{-\infty}^{y} q_R(x)\, dx \le \int_{-\infty}^{y} p(x)\, dx$ is fulfilled for all $y$.

For positive $y$ we have the same inequality for $q$ itself (because $K_R = 1$ for $q_R \equiv q$). But for negative values of $y$ we know

nothing but $0 \le \int_{-\infty}^{y} p(x)\, dx$.

Therefore the only condition we can use is $1 - K_R + \int_{-\infty}^{y} q_R(x)\, dx \le 0$ for all negative values of $y$. For reasons of continuity the same is valid for $y = 0$. Using now the Gaussian type of $q_R$, calculating the integral and inserting $y = 0$ leads to

$$ 1 - \frac{K_R}{2} = 1 - K_R + \frac{K_R}{2} \cdot \left( 1 + erf(\frac{0}{\sigma_R \sqrt{2}}) \right) = 1 - K_R + \int_{-\infty}^{0} q_R(x)\, dx \le 0 \quad \Rightarrow \quad K_R \ge 2 $$

which answers the above question: we can not get a smaller factor than 2 in the definition of $q_R$.

The invention further discloses an apparatus that is arranged such that it is capable to execute the methods described above. Such an apparatus could be part of one of the GNSS, e.g. a satellite of the GNSS or some ground systems or the receiver of a user.

The invention was described for GNSS and the overbounding concepts Galileo Overbounding, ICAO Overbounding and Paired Overbounding with Excess Mass. However, it is to be understood by those skilled in the art that the invention is neither limited to GNSS nor to Galileo Overbounding, ICAO Overbounding and Paired Overbounding with Excess Mass, respectively.

For further clarifications the following is disclosed: Prerequisites:

$$ \tilde{q}_L := 2\chi_{(-\infty,0]} q \;, \quad q := \frac{1}{\sqrt{2\pi}\sigma} \exp(-\frac{1}{2}(\frac{\cdot}{\sigma})^2) $$

$$ q_L := \frac{K}{\sqrt{2\pi}\sigma} \exp\left( -\frac{1}{2}(\frac{\cdot - \mu}{\sigma})^2 \right) \qquad \text{with } \mu < 0 $$

Which conditions have to be stipulated on K and $\mu$, that it holds:

$$ F_{\tilde{q}_L} \le F_{q_L} \tag{1} $$

Let $z \geq 0$ : It holds $F_{\tilde{q}_L}(z) = 1 \overset{!}{\leq} F_{q_L}(0) \overset{\text{monotonic increasing}}{\leq} F_{q_L}(z) = \frac{K}{2}\left(1 + \mathrm{erf}(\frac{z-\mu}{\sqrt{2}\sigma})\right)$

$$\Rightarrow \quad 1 \overset{!}{\leq} \frac{K}{2}\left(1 + \mathrm{erf}(\frac{-\mu}{\sqrt{2}\sigma})\right).$$ Then it holds $F_{qL\,(z)} \leq F_{qL\,(z)}$ for $z \geq 0$.

Set $K := \dfrac{2}{\left(1 + \mathrm{erf}(\frac{-\mu}{\sqrt{2}\sigma})\right)}$ , i.e. the smallest K will be used. Let $z < 0$: It is

$$F_{\tilde{q}_L}(z) = \int_{-\infty}^{z} 2\chi_{(-\infty,0]}(x)q(x)\,dx = 2\int_{-\infty}^{z} q(x)\,dx = 2F_q(z) = 2 \cdot \frac{1}{2} \cdot \left(1 + \mathrm{erf}(\frac{z}{\sqrt{2}\sigma})\right) = 1 + \mathrm{erf}(\frac{z}{\sqrt{2}\sigma}).$$

i.e. (1) is equivalent to $1 + \mathrm{erf}(\frac{z}{\sqrt{2}\sigma}) \overset{!}{\leq} \frac{K}{2}\left(1 + \mathrm{erf}(\frac{z-\mu}{\sqrt{2}\sigma})\right)$ .

With the K from above this will be: $1 + \mathrm{erf}(\frac{z}{\sqrt{2}\sigma}) \overset{!}{\leq} \dfrac{1 + \mathrm{erf}(\frac{z-\mu}{\sqrt{2}\sigma})}{\underbrace{1 + \mathrm{erf}(\frac{-\mu}{\sqrt{2}\sigma})}_{\geq 0,\ \text{for}\ \mu < 0}}$ .

Abbreviate: $\bar{z} := z/\left(\sqrt{2}\sigma\right)$, $\bar{\mu} := \mu/\left(\sqrt{2}\sigma\right)$ and multiply with (the positive) denominator of the right side, then (1) is equivalent to

$$\left(1 + \mathrm{erf}(\bar{z})\right)\left(1 + \mathrm{erf}(-\bar{\mu})\right) \overset{!}{\leq} 1 + \mathrm{erf}(\bar{z} - \bar{\mu}) \qquad |-1$$

$$\Leftrightarrow \quad \mathrm{erf}(\bar{z}) + \overset{-|\bar{\mu}|}{\overbrace{\mathrm{erf}(-\bar{\mu})}} + \mathrm{erf}(\bar{z}) \cdot \mathrm{erf}(-\bar{\mu}) \overset{!}{\leq} \mathrm{erf}(\bar{z} - \bar{\mu}) \qquad |\cdot\frac{\sqrt{\pi}}{2} .$$

$$\overset{f(t):=\exp(-t^2)}{\Leftrightarrow} \quad \int_0^{\bar{z}} f + \int_0^{|\bar{\mu}|} f + \mathrm{erf}(\bar{z})\int_0^{|\bar{\mu}|} f \overset{!}{\leq} \int_0^{\bar{z}-\bar{\mu}} f \qquad (2)$$

Distinction of cases: 1. $\bar{\mu} \leq \bar{z} < 0$ and 2. $\bar{z} < \bar{\mu}$.

So let $\bar{\mu} \leq \bar{z} < 0$. Consider because of $\underbrace{\mathrm{erf}(\bar{z})}_{<0} \underbrace{\int_0^{|\bar{\mu}|} f}_{>0} < 0$ :

$$\int_0^{\bar{z}} f + \int_0^{|\bar{\mu}|} f \overset{\bar{z}<0,\,f\ \text{symmetric at }0}{=} \int_{|\bar{z}|}^{0} f + \int_0^{|\bar{\mu}|} f = \int_{|\bar{z}|}^{|\bar{\mu}|} f. \quad \text{Notice } |\bar{\mu}| \geq |\bar{z}|. \qquad (*)$$

Furthermore, because of $\bar{\mu} \le \bar{z}$: $\bar{z} - \bar{\mu} = |\bar{z} - \bar{\mu}|$, therefore $\int_0^{\bar{z}-\bar{\mu}} f = \int_0^{|\bar{z}-\bar{\mu}|} f$.

Now it holds $|\bar{\mu}| - |\bar{z}| = ||\bar{\mu}| - |\bar{z}|| \le |\bar{z}-\bar{\mu}|$ and f is monotone decreasing for positive arguments, therefore it holds

$$\int_{|\bar{z}|}^{|\bar{\mu}|} f \le \int_0^{|\bar{z}-\bar{\mu}|} f :$$

Altogether it has been shown: $\int_0^{\bar{z}} f + \int_0^{|\bar{\mu}|} f + erf(\bar{z}) \cdot \int_0^{|\bar{\mu}|} f < \int_0^{\bar{z}} f + \int_0^{|\bar{\mu}|} f = \int_{|\bar{z}|}^{|\bar{\mu}|} f \le \int_0^{|\bar{z}-\bar{\mu}|} f = \int_0^{\bar{z}-\bar{\mu}} f$, that

is (2) for $\mu \le z < 0$.

Now let $\bar{z} < \bar{\mu}$, i.e. $\bar{z} < 0$.

As above (*), it follows $\int_0^{\bar{z}} f + \int_0^{|\bar{\mu}|} f = \int_{|\bar{z}|}^{|\bar{\mu}|} f = -\int_{|\bar{\mu}|}^{|\bar{z}|} f$.

Analogue it holds because of the symmetry of f for the right side of (2):

$$\int_0^{\bar{z}-\bar{\mu}} f = -\int_{\bar{z}-\bar{\mu}}^0 f = -\int_0^{-(\bar{z}-\bar{\mu})} f = -\int_0^{\bar{\mu}-\bar{z}} f .$$

Therefore, (2) is equivalent to: $-\int_{|\bar{\mu}|}^{|\bar{z}|} f + erf(\bar{z}) \int_0^{|\bar{\mu}|} f \overset{!}{\le} -\int_0^{\bar{\mu}-\bar{z}} f$.

$$\overset{erf(\bar{z})=-erf(|\bar{z}|)}{\Longleftrightarrow} \int_0^{\bar{\mu}-\bar{z}} f \le \int_{|\bar{\mu}|}^{|\bar{z}|} f + erf(|\bar{z}|) \int_0^{|\bar{\mu}|} f . \qquad (3)$$

Now showing (3):

$$\int_{|\tilde{\mu}|}^{|\tilde{z}|} f + erf(|\tilde{z}|)\cdot\int_{0}^{|\tilde{\mu}|} f = \int_{|\tilde{\mu}|}^{|\tilde{z}|} f + (1 - erfc(|\tilde{z}|))\cdot\int_{0}^{|\tilde{\mu}|} f = \int_{0}^{|\tilde{z}|} f - erfc(|\tilde{z}|)\cdot\int_{0}^{|\tilde{\mu}|} f = \dots$$

$$\overset{\tilde{\mu}-\tilde{z}<|\tilde{z}|,\text{ for }\tilde{\mu}<0}{=} \int_{0}^{\tilde{\mu}-\tilde{z}} f + \int_{\tilde{\mu}-\tilde{z}}^{|\tilde{z}|} f - \overset{>0}{\overline{erfc(|\tilde{z}|)}}\int_{0}^{|\tilde{\mu}|} f \geq \dots$$

$$\overset{0\leq f\leq 1}{\geq} \int_{0}^{\tilde{\mu}-\tilde{z}} f + \min_{x\in[\tilde{\mu}-\tilde{z},|\tilde{z}|]} f(x)\cdot\overbrace{(|\tilde{z}|-(\tilde{\mu}-\tilde{z}))}^{=-\tilde{z}-\tilde{\mu}+\tilde{z}=|\tilde{\mu}|} - erfc(|\tilde{z}|)\cdot\overbrace{\max_{x\in[0,|\tilde{\mu}|]} f(x)}^{=1}\cdot(|\tilde{\mu}|-0) =$$

$$\overset{f\text{ is monotone decreasing for positive arguments}}{=} \int_{0}^{\tilde{\mu}-\tilde{z}} f + f(|\tilde{z}|)\cdot|\tilde{\mu}| - erfc(|\tilde{z}|)\cdot|\tilde{\mu}| \qquad\qquad (4)$$

Now it holds $erfc(x) \leq f(x)$ for $x>0$.

$$\Gamma\ erfc(x) = \tfrac{2}{\sqrt{\pi}}\int_{x}^{\infty}\exp(-t^2)dt \overset{u:=t-x}{\underset{"du=dt"}{=}} \tfrac{2}{\sqrt{\pi}}\int_{0}^{\infty}\exp\left(-(u+x)^2\right)du = \tfrac{2}{\sqrt{\pi}}\int_{0}^{\infty}\exp(-u^2)\cdot\exp(-2ux-x^2)du =$$

$$= \exp(-x^2)\tfrac{2}{\sqrt{\pi}}\int_{0}^{\infty}\underbrace{\exp(-u^2)}_{>0}\ \underbrace{\exp(-2ux)}_{0<\dots\leq 1,\text{ for }x>0,u\geq 0}\ du \leq \exp(-x^2)\tfrac{2}{\sqrt{\pi}}\int_{0}^{\infty}\exp(-u^2)du = \exp(-x^2) \equiv f(x)\ \rfloor$$

Therefore, it holds because of (4)

$$\int_{|\tilde{\mu}|}^{|\tilde{z}|} f + erf(|\tilde{z}|)\cdot\int_{0}^{|\tilde{\mu}|} f \geq \int_{0}^{\tilde{\mu}-\tilde{z}} f + f(|\tilde{z}|)\cdot|\tilde{\mu}| - f(|\tilde{z}|)\cdot|\tilde{\mu}| = \int_{0}^{\tilde{\mu}-\tilde{z}} f \ ,\ \text{that is (3) for } z<\mu.$$

Because (3) $\Leftrightarrow$ (2) $\Leftrightarrow$ (1), everything has been shown. q.e.d.

Add on for faulty case: Satellite j faulty! Shift $TH_j$.

Overbounding condition without shift by $TH_j$ fulfilled, i.e. $q := \dfrac{1}{\sqrt{2\pi}\sigma}\exp(-\dfrac{1}{2}(\dfrac{\cdot}{\sigma})^2)$

$$\tilde{q}_{L,S} := 2\chi_{(-\infty,-TH]}q(\cdot+TH)\ ,$$

$$\tilde{q}_{R,S} := 2\chi_{(0,\infty)}q(\cdot - TH),$$

$$q_{L,S} := \frac{K}{\sqrt{2\pi}\sigma}\exp\left(-\frac{1}{2}(\frac{\cdot + TH - \mu_L}{\sigma})^2\right) \quad \text{with } \mu_L < 0$$

$$q_{R,S} := \frac{K}{\sqrt{2\pi}\sigma}\exp\left(-\frac{1}{2}(\frac{\cdot - TH - \mu_R}{\sigma})^2\right) \quad \text{with } \mu_R > 0$$

$F_{\tilde{q}_{L,S}} \le F_{q_{L,S}}: \quad F_{\tilde{q}_{L,S}}(z) = F_{\tilde{q}_L}(z+TH) \le F_{q_L}(z+TH) = F_{q_{L,S}}(z)$ with $K_L$ as above! (Let $z \ge$ -TH: It holds

$$F_{\tilde{q}_{L,S}}(z) = 1 \overset{!}{\le} F_{q_{L,S}}(-TH) \le F_{q_{L,S}}(z) = F_{q_L}(z+TH) = \frac{K}{2}\left(1 + \text{erf}(\frac{z - (\mu_L - TH)}{\sqrt{2}\sigma})\right)$$

$$\Rightarrow \quad 1 \overset{!}{\le} \frac{K}{2}\left(1 + \text{erf}(\frac{-\mu_L}{\sqrt{2}\sigma})\right)$$

claim: $F_{\tilde{q}_{R,S}}^{\cdot} \le F_{p(-TH)}, \quad F_{p(+TH)} \le F_{\tilde{q}_{L,S}}:$

$$F_{\tilde{q}_{L,S}}(z) = 2\int_{-\infty}^{z}\chi_{(-\infty,-TH]}(x)q(x+TH)\,dx \overset{y=x+TH}{=} 2\int_{-\infty}^{z+TH}\underbrace{\chi_{(-\infty,-TH]}(y-TH)}_{=\chi_{(-\infty,0]}(y)}q(y)\,dy \dots$$

$$= \int_{-\infty}^{z+TH} 2\chi_{(-\infty,0]}(y)q(y)\,dy = F_{\tilde{q}_L}(z+TH)$$

Therefore, it holds

$$F_{p(+TH)}(z) = \int_{-\infty}^{z}p(x+TH)\,dx = \int_{-\infty}^{z+TH}p(y)\,dy = F_p(z+TH) \le F_{\tilde{q}_L}(z+TH) \le F_{\tilde{q}_{L,S}}(z)$$

$$F_{\tilde{q}_{R,S}}^{\cdot}(z) = 1 - \underbrace{K_R}_{=1} + F_{\tilde{q}_{R,S}}(z) \overset{\text{as above}}{=} F_{\tilde{q}_R}(z-TH) \le F_p(z-TH) = F_{p(-TH)}(z)$$

## Claims

1. Method for determining conservative overbounds in a satellite positioning system comprising the steps

   - determine conservative overbounds ($q_i(x)$ of at least one error ($\varepsilon_i$) in a range domain,
   - separately multiply the conservative overbounds ($q_i(x)$) of errors ($\varepsilon_i$) in the range domain once by a first function $\Theta(-x) \cdot 2$ and another time by a second function $\Theta(x) \cdot 2$, wherein $\Theta(x)$ is defined as follows: $\Theta(x)=1$ for $x \ge 0$ and

$\Theta(x)=0$ for x < 0, to obtain pairs of overbounds ($q_{iw}(x)$ and $q_{iR}(x)$) of errors ($\varepsilon_i$) in the range domain,
- determine an upper bound for the integrity risk at the alert limit ($p_{w,int}(AL)$) in a position domain using pairs of overbounds ($q_{iw}(x)$ and $q_{iR}(x)$) of errors ($\varepsilon_i$) in the range domain.

2. Apparatus arranged to execute a method according to claim 1.

## Patentansprüche

1. Verfahren zum Bestimmen von vorsichtigen Overbounds in einem Satellitenpositionsbestimmungssystem, mit den folgenden Schritten:

- Bestimmen von vorsichtigen Overbounds ($q_i(x)$) mindestens eines Fehlers ($\varepsilon_i$) in einer Entfernungsdomäne,
- separates Multiplizieren der vorsichtigen Overbounds ($q_i(x)$) von Fehlern ($\varepsilon_i$) in der Entfernungsdomäne einmal mit einer ersten Funktion $\Theta(-x)\cdot2$ und ein weiteres Mal mit einer zweiten Funktion $\Theta(x)\cdot2$, wobei $\Theta(x)$ folgendermaßen definiert ist: $\Theta(x)=1$ für $x \geq 0$ und $\Theta(x)=0$ für x < 0, um Paare von Overbounds ($q_{iw}(x)$ und $q_{iR}(x)$) von Fehlern ($\varepsilon_i$) in der Entfernungsdomäne zu erhalten,
- Bestimmen einer oberen Schranke für das Integritätsrisiko am Warnlimit ($p_{w,int}(AL)$) in einer Positionsdomäne unter Verwendung der Paare von Overbounds ($q_{iw}(x)$ und $q_{iR}(x)$) von Fehlern ($\varepsilon_i$) in der Entfernungsdomäne.

2. Vorrichtung, die dafür ausgelegt ist, ein Verfahren nach Anspruch 1 auszuführen.

## Revendications

1. Procédé pour déterminer des bornes surestimées prudentes dans un système de positionnement par satellites, le procédé comprenant les étapes consistant à :

- déterminer des bornes surestimées prudentes ($q_i(x)$) d'au moins une erreur ($\varepsilon_i$) dans un domaine de distances,
- multiplier séparément les bornes surestimées prudentes ($q_i(x)$) d'erreurs ($\varepsilon_i$) dans le domaine de distances une fois par une première fonction $\theta(-x)\cdot2$ et une autre fois par une deuxième fonction $\theta(x)\cdot2$, $\theta(x)$ étant définie de la façon suivante : $\theta(x)=1$ pour $x\geq0$ et $\theta(x)=0$ pour x<0, dans le but d'obtenir des paires de bornes surestimées prudentes ($q_{iL}(x)$ et ($q_{iR}(x)$) d'erreurs ($\varepsilon_i$) dans le domaine de distances,
- déterminer une borne supérieure pour le risque d'intégrité à la limite d'alerte ($p_{w,int}(AL)$) dans un domaine de positions à partir de paires de bornes surestimées ($q_{iL}(x)$ et ($q_{iR}(x)$) d'erreurs ($\varepsilon_i$) dans le domaine de distances.

2. Appareil, conçu exécuter un procédé selon la revendication 1.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **OEHLER V. et al.** The Galileo Integrity Concept. *International Technical Meeting of the Satellite Division of the Institute of Navigation,* 21 September 2004, 604-615

- **J.RIFE ; T. WALTER ; J. BLANCH.** Overbounding SBAS and GBAS Error Distributions with Excess-Mass Functions. *Proceedings of GNSS 2004,* 08 December 2004